# EUROPÄISCHE PATENTSCHRIFT

(11) **EP 0 908 636 B1**
(45) Veröffentlichungstag und Bekanntmachung des Hinweises auf die Patenterteilung: **22.05.2002**
(21) Anmeldenummer: 98118855.0
(22) Anmeldetag: 06.10.1998
(51) Int. Cl.: F16B 19/08, B21J 15/02

(54) **Stanzniet sowie Verfahren zu dessen Herstellung**
Self-piercing rivet and method of manufacturing the same
Rivet poinçonnant et son procédé de fabrication

(30) Priorität: 10.10.1997 DE 19744787
(43) Veröffentlichungstag der Anmeldung: 14.04.1999
(73) Patentinhaber: Hahn, Ortwin, Prof. Dr.-Ing., 33100 Paderborn (DE)
(72) Erfinder: Hahn, Ortwin, Prof. Dr. Ing., 33100 Paderborn (DE); Kurzok, J. Dipl.-Ing., 33106 Paderborn (DE)
(74) Vertreter: Berghoff, Wilhelm, Dipl. Ing.

(56) Entgegenhaltungen:
- WO-A-97/22810
- DE-A- 19 648 231
- GB-A- 2 180 030
- US-A- 4 130 922

## Beschreibung

Die Erfindung betrifft einen Stanzniet mit einem Setzkopf, einem Schaft und einem Schaftfuß zur Verbindung von Bauteilen sowie ein Verfahren zu deren Herstellung.

Stanznieten sind aus dem Stand der Technik seit vielen Jahren bekannt als Mittel zur Verbindung von Bauteilen. Sie haben sich vielfältig bewährt. Sie können eingesetzt werden, um Bauteile aus gleichen oder unterschiedlichen Werkstoffen fest miteinander zu verbinden. Ein Stanzniet besteht in der Regel aus einem runden Metallbolzen, der mit einem Setzkopf versehen ist. Der Schaft der Stanzniete wird entweder durch bereits vorhandene Löcher der zu verbindenden Bauteile gesteckt, oder der Schaftfuß ist selbstschneidend ausgebildet und wird unter Krafteinwirkung an der Verbindungsstelle durch die zu verbindenden Bauteile hindurchgetrieben. Sodann wird der Schaftfuß und teilweise auch der Schaft selbst zu einem Schließkopf ausgebildet, der den Durchführkanal zumindest teilweise hinterschneidet und so zu den zu verbindenden Bauteilen eine kraft- und formschlüssige Verbindung ausbildet.

Nach einer neueren Technik ist es zur Herstellung der formschlüssigen Verbindung nicht erforderlich, daß der Stanzniet alle miteinander zu befestigenden Bauteile vollständig durchdringt, sondern es genügt auch, wenn der Stanzniet das oder die oberen Bauteile durchdringt und sich im Werkstoff des unteren Bauteils aufweitend verkrallt, ohne daß sie dieses Bauteil vollständig durchdringt. Ein Beispiel für diese neuere Technik findet sich in der DE 196 48 231.

Je nach Anforderungen an die Qualität und Festigkeit der herzustellenden Verbindung schwankt auch der Aufwand, der betrieben werden muß, um die Stanznieten selbst herzustellen. Üblicherweise werden Stanznieten rund mit einer in der Verbindungslängsachse rotationssymmetrischen Geometrie hergestellt. Insbesondere bei der Verwendung von Stanznieten in Produkten, die in Serie hergestellt werden, werden hohe Anforderungen an die Maßhaltigkeit, Homogenität des Werkstoffs und das Formverhalten des Stanzniets im Verlauf des Stanznietprozesses gestellt, um eine gleichbleibende Verbindungsqualität sicherzustellen.

In der WO 97/22810 sind Stanzniete dargestellt und beschrieben, die einen einbis vierseitig seitlich abgeflächten Kopf aufweisen. Dieser Kopf bildet gegenüber dem Schaft einen radial sich erstreckenden Vorsprung, und zwar in mehr als zwei diametral gegenüberliegenden Richtungen.

In einer der vielen hier dargestellten Versionen der Nietausgestaltung weist nicht nur der Kopf sondern auch der Schaft eine Rechteckform auf, jedoch ragt der Kopf allseitig über die Außenkontur des Schaftes hinaus. Jeder einzelne Niet wird somit in seiner Gesamtgestaltung vom Anfang bis zum Ende in Einzelfertigung hergestellt.

In der US-A-4 130 922 ist ein plattenförmiger Stanzniet dargestellt und beschrieben, dessen vier Seitenflächen rinnenförmig ausgeführt sind. Auch ein derartig ausgeführter Stanzniet wird in seiner Gesamtform einzeln hergestellt.

Da jeder Stanzniet in den bekannten Fertigungsverfahren im Prinzip als Einzelstück hergestellt wird, muß bei der Herstellung von Stanznieten für Serienanwendungen ein relativ hoher Aufwand getrieben werden, um große Stückzahlen von qualitativ gleichwertigen Stanznieten sicher herstellen zu können.

Es ist die Aufgabe der vorliegenden Erfindung, Stanznieten sowie ein Verfahren zu deren Herstellung vorzuschlagen, welche einen geringeren Herstellungsaufwand verursachen.

Die Aufgabe wird gelöst, indem zwei gegenüberliegende Flächen in ihrer Gesamtheit planparallel verlaufen. Als Herstellungsverfahren wird vorgeschlagen, ein Stabprofil zu einer gewünschten Geometrie auszuformen und dann die Stanzniete vom Stabprofil abzulängen. Weitere vorteilhafte Ausgestaltungen der Erfindung ergeben sich aus den kennzeichnenden Merkmalen der Unteransprüche.

Das vorgeschlagene Verfahren erlaubt es, mit geringen Kosten und hoher Fertigungsgeschwindigkeit eine Vielzahl qualitativ gleichwertiger Stanzniete herzustellen. Die Besonderheit des Stanzniets, zwei gegenüberliegende Flächen in ihrer Gesamtheit planparallel verlaufend auszubilden, erlaubt es, ohne aufwendige Nachbearbeitungen aus Stangenware Stanzniete herstellen zu können. Gleichzeitig erlaubt die neu vorgeschlagene Form der Stanzniete einen größeren Spielraum hinsichtlich verschiedener Nietgeometrien. Die Stanzniete können so besser und einfacher an spezielle Anforderungen einer Verbindung angepasst werden.

Im folgenden wird die Erfindung anhand von Ausführungsbeispielen näher erläutert. Es zeigen:
- Figur 1:: eine beispielhafte Ausgestaltung des Verfahrensablaufs,
- Figur 2:: einen erfindungsgemäß hergestellten Stanzniet,
- Figuren 3 - 5:: beispielhafte Abwandlungen eines erfindungsgemäß hergestellten Stanzniets.

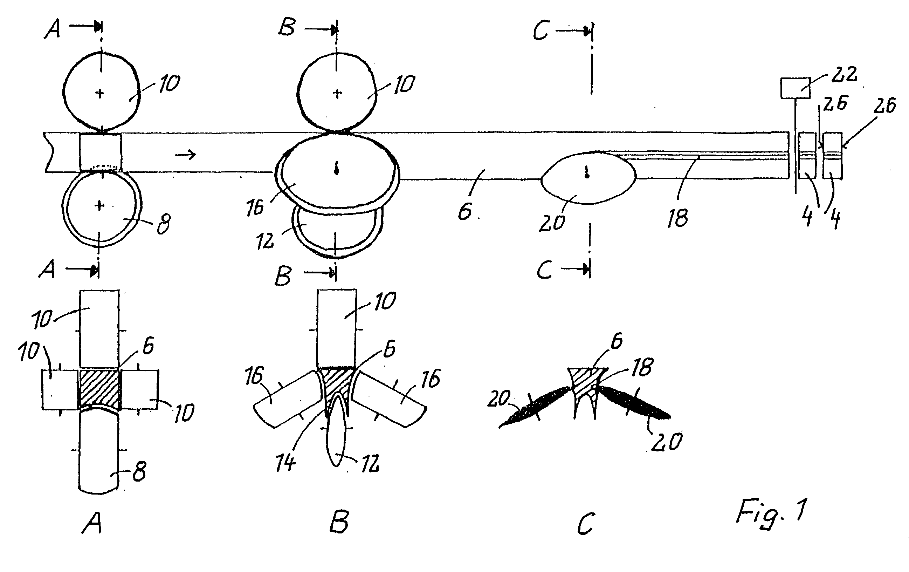

In Figur 1 ist eine stilisiert dargestellte Fertigungsstraße 2 für Stanznieten 4 zu sehen, die aus einem Stabprofil 6 hergestellt werden. Zu den Bearbeitungsstationen A, B, C finden sich im unteren Teil der Figur 1 jeweils Darstellungen der Querschnittsansichten an den jeweiligen Stellen der Bearbeitungsstationen. Ein Stabprofil 6 durchläuft in der gekennzeichneten Richtung die Fertigungsstraße 2. Während des Durchlaufs wird das Stabprofil 6 von einer Mehrzahl von Werkzeugen in seiner Geometrie verändert. Die Werkzeuge können, wie in Figur 1 gezeigt, als Walzen ausgebildet sein. Im Ausführungsbeispiel weist das Stabprofil 6 vor Erreichen der Bearbeitungsstation A einen annähernd quadratischen Querschnitt auf. Der Querschnitt kann unabhängig vom Ausführungsbeispiel natürlich auch andere für die Herstellungszwecke geeignete Ausgangsgeometrien aufweisen. In der Bearbeitungsstation A wird die Geometrie des Profilstabes 6 insbesondere durch die Walze 8 verändert, die eine Vertiefung zur Ausbildung der Schaftfüße in die Unterseite des Profilstabes 6 einwalzt. Die Walzen 10 in der Bearbeitungsstation A dienen als Gegenhalter. In der Bearbeitungsstation B bewirkt eine weitere Walze 12 eine stärkere Ausbildung eines Hohlraumes beziehungsweise einer Nut an der Unterseite des Profilstabes 6, der seitlich von den Schaftfüßen 14 begrenzt wird. Die Druckrollen 16 unterstützen die Ausbildung des Hohlraumes und formen zusätzlich den Schaft der späteren Stanznieten aus, während die Walze 10 wiederum im wesentlichen als Gegenhalter dient, der gleichzeitig die Oberfläche des Profilstabs 6 glattwalzt. An der Station C werden seitlich in den Schaft Vertiefungen 18 durch die Schneidscheiben 20 eingebracht. Die Station C dient als Beispiel für die Vornahme von Bearbeitungen des Profilstabes 6, die auch aus anderen Maßnahmen als die Einbringung einer Vertiefung bestehen können, wie beispielsweise eine Aufrauhung, Politur, Beschichtung, Erwärmung, etc. Nach Durchlaufen der Bearbeitungsstationen A, B, C erreicht der Profilstab 6 die Station D, an der eine Trennvorrichtung 22 die einzelnen Stanznieten 4 ablängt, indem diese vom Profilstab 6 abgetrennt werden, wodurch an jedem Stanzniet zwei gegenüberliegende planparallele Flächen 26 geschaffen werden. Als Trenntechnik kann der Fachmann eine auswählen, die ihm aus allen an sich bekannten Trenntechniken, wie beispielsweise Sägen, Kaltschlagen, Laserschneiden, oder sonstigen Trenntechniken, als am geeignetsten für seine Anwendung erscheint. Die abgelängten Stanznieten 4 weisen in der gezeigten Seitenansicht eine rechteckige Geometrie auf, in der Vorderansicht gleichen sie jedoch dem Querschnitt des Profilstabs 6 an der Bearbeitungsstation C.

Die Walzen, die zur Formung des Profilstabes eingesetzt werden, müssen nicht notwendigerweise eine glatte Umfangsfläche aufweisen, sondern können in ihrem Umfang in beliebiger und vorteilhafter Weise strukturiert sein. So ist es beispielsweise vorstellbar, Walzen mit einem umfangsseitigen Wellenprofil einzusetzen, wodurch der Profilstab in Förderrichtung einen ungleichmäßigen Querschnitt erhält. Anstelle der Formung der gewünschten Geometrie des Profilstabs 6 durch ein Walzverfahren, wie es in Figur 1 beschrieben ist, kommen auch andere Formungstechniken in Betracht. So ist es vorstellbar, daß anstelle des Walzens im kontinuierlichen Prozeß auch ein diskontinuierliches Verfahren wie beispielsweise per Reversierwalzen durchgeführt wird. Neben oder anstelle einer umformenden Bearbeitung können auch spanende oder trennende Techniken eingesetzt werden. Anstelle von Walzwerkzeugen können auch ausschließlich oder in Kombination mit Walzwerkzeugen geeignete Hubwerkzeuge zur Herstellung der gewünschten Geometrie eingesetzt werden. Einzelne Walzen können motorisch oder von Hand zugestellt oder abgestellt werden, oder der Anstellwinkel oder das Profil einzelner oder mehrerer Walzen 8, 10, 12, 16, 20 können, wenn andere Geometrien gewünscht sind oder der Prozeßverlauf eine entsprechende Anpassung erfoderlich machen, verändert werden.

Das Walzen kann bei glühendem oder kaltem Stabprofil 6 vorgenommen werden. Beim Walzen des kalten Stabprofils 6 (bis zu 500 ° C) entsteht im Stabprofil 6 eine Kaltverformung, die zu einer Härtung der betroffen Abschnitte des Stabprofils 6 führt. Eine solche Härtung kann erwünscht sein, um ein definiertes Umformverhalten eines Stanzniets 4 im Stanznietprozeß zu erhalten. Wenn sie nicht erwünscht ist, müssen der Profilstab 6 oder die abgelängten Stanznieten 4 anschließend erhitzt werden, um eine Entspannung im Kristallverbund des Materials zu erreichen. Der Prozeß kann sowohl im kontinuierlichen wie auch im diskontinuierlichen Betrieb Zwischenglühungen beinhalten. Es kann sinnvoll sein, eine Oberflächenbearbeitung oder -beschichtung erst nach den erforderlichen Erhitzungen oder auch erst nach dem Trennen der Stanznieten 4 vom Profilstab 6 vorzunehmen.

Ergänzend zu den in Figur 1 gezeigten Bearbeitungen A bis C können weitere Bearbeitungen vorgenommen werden. So könnte beispielsweise durch weitere Werkzeuge eine besondere Nietfußgeometrie ausgebildet werden. Das kann durch Walzen, Pressen, Schleifen, Fräsen oder sonstige Bearbeitungen im kontinuierlichen Prozeß oder von diesem entkoppelt, je nach Anwendungsfall und Günstigkeit, erfolgen.

Das vorgeschlagene Verfahren kann in Teilschritten zur Herstellung von Halbzeugen, aber auch in einem vollständigen Prozeß bis zur Herstellung der fertigen Stanzniete angewendet werden.

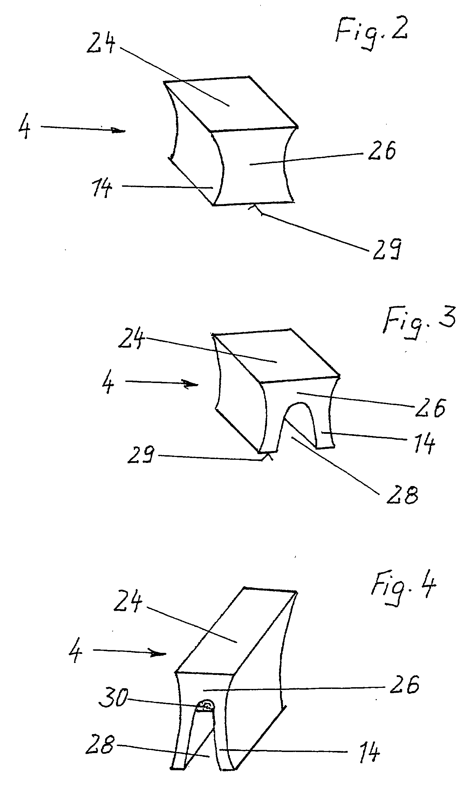

In Figur 2 ist ein Stanzniet 4 gezeigt, der eine Kopffläche 24, einen Schaft und einen Schaftfuß 14 mit Fußfläche 29 aufweist. Der in Figur 2 gezeigte Stanzniet 4 ist ein Vollniet, in dem kein Hohlraum oder Nut im Bereich des Schaftfußes 14 ausgebildet ist. Der Stanzniet 4 hat eine annähernd quadratische Kopffläche 24.

In Figur 3 ist ein Stanzniet 4 mit einer tiefen Nut bzw. einem Hohlraum 28 dargestellt.

In Figur 4 ist ein weiterer Stanzniet 4 dargestellt, bei dem die Nut beziehungsweise der Hohlraum 28 teilweise durch eine hydrostatisch wirkende Substanz 30 gefüllt ist.

## Patentansprüche

1. Stanzniet (4) mit einer rechtwinklig zur Einsetzrichtung verlaufenden Kopffläche (24) und einer zumindest in einer Richtung parallel zur Kopffläche (24) verlaufenden Fußfläche (29), dessen sämtliche Querschnittsflächen zwischen der Kopf- und Fußfläche ein Rechteck bilden und mindestens eine Fläche eines ersten gegenüberliegenden Seitenflächenpaares eine senkrecht zur Einsetzrichtung sich längs erstreckende Hinterschneidung aufweist, **dadurch gekennzeichnet, dass** die beiden Flächen des zweiten gegenüberliegenden Seitenflächenpaares (26) in ihrer Gesamtheit planparallel verlaufen.

2. Stanzniet (4) nach Anspruch 1, **dadurch gekennzeichnet, dass** der Schaft (26) einen zum Schaftfuß (14) hin geöffneten, rinnenförmigen Hohlraum (28) aufweist, der rechtwinklig zu den beiden planparallelen Seitenflächen (26) verläuft.

3. Stanzniet (4) nach Anspruch 1 oder 2, **dadurch gekennzeichnet, dass** der Hohlraum (28) zumindest teilweise mit einer hydrostatisch wirkenden Substanz gefüllt ist.

4. Verfahren zur Herstellung eines Stanzniets (4) mit einer rechtwinklig zur Einsetzrichtung verlaufenden Kopffläche (24) und einer zumindest in einer Richtung parallel zur Kopffläche (24) verlaufenden Fußfläche (29), dessen sämtliche Querschnittsflächen zwischen der Kopf- und Fußfläche ein Rechteck bilden und mindestens eine Fläche eines ersten gegenüberliegenden Seitenflächenpaares eine senkrecht zur Einsetzrichtung sich längs erstreckende Hinterschneidung aufweist, **dadurch gekennzeichnet, dass** zunächst ein Stabprofil (6) erstellt wird, dessen Oberseite der Kontur der Kopffläche (24), dessen Unterseite der Kontur der Fußfläche (29) und dessen Seitenflächen den Konturen des ersten Seitenflächenpaares des Stanzniets entsprechen und anschließend Abschnitte in einer Länge, die der Breite des Stanznietes (4) entsprechen, von dem Stabprofil (6) abgetrennt werden.

5. Verfahren nach Anspruch 4, **dadurch gekennzeichnet, dass** das Stabprofil (6) durch Materialumformung hergestellt wird.

6. Verfahren nach Anspruch 5, **dadurch gekennzeichnet, dass** die Materialumformung zur Herstellung des Stabprofils (6) durch Walzen erfolgt.

7. Verfahren nach Anspruch 4, **dadurch gekennzeichnet, dass** die Profilierung des Stabprofils (6) durch eine spanende Verformung erfolgt.

8. Verfahren nach einem der vorstehenden Ansprüche, **dadurch gekennzeichnet, dass** die Stanzniete (4) durch Schneiden oder Sägen von dem Stabprofil (6) abgelängt werden.

## Claims

1. A self-piercing rivet (4) having a head surface or upper surface (24) running at right angles to the direction of insertion and a lower surface (29) running parallel to the head surface (24) at least in one direction, all of the rivet's cross-sectional areas between the upper and lower surfaces forming a rectangle, and at least one face of a first pair of opposing side faces having an undercut extending longitudinally perpendicular to the direction of insertion, **characterized in that** the two faces of the second pair of opposing side faces (26) extend as a whole so as to be plane-parallel.

2. A self-piercing rivet (4) according to Claim 1, **characterized in that** the shaft (26) has a channel-like hollow space (28) which is open towards the base (14) of the shaft and runs at right angles to the two plane-parallel side faces (26).

3. A self-piercing rivet (4) according to Claim 1 or 2, **characterized in that** the hollow space (28) is at least partly filled with a hydrostatically acting substance.

4. A method of manufacturing a self-piercing rivet (4) which has a head surface (24) running at right angles to the direction of insertion and a lower surface (29) running parallel to the head surface (24) at least in one direction, all of the rivet's cross-sectional areas between the upper and lower surfaces forming a rectangle and at least one face of a first pair of opposing side faces having an undercut which extends longitudinally perpendicular to the direction of insertion, **characterized in that** first of all a rod profile (6) is prepared, its upper side corresponding to the contour of the head surface (24), its lower side corresponding to the contour of the lower surface (29) and its side faces corresponding to the contours of the first pair of side faces of the self-piercing rivet, and then portions are cut off from the rod profile (6) in a length corresponding to the width of the self-piercing rivet (4).

5. Method according to Claim 4, **characterized in that** the rod profile (6) is produced by material deformation.

6. Method according to Claim 5, **characterized in that** the material is deformed by means of rollers for producing the rod profile (6).

7. Method according to Claim 4, **characterized in that** the shape of the rod profile (6) is produced by machining.

8. Method according to one of the preceding claims, **characterized in that** the self-piercing rivets (4) are cut into lengths from the rod profile (6) by cutting or sawing.

## Revendications

1. Rivet auto-poinçonnant (4) comportant une surface de tête (24) qui s'étend à angle droit par rapport à la direction d'introduction, et une surface de pied (29) qui s'étend au moins dans une direction parallèle à la surface de tête (24), dont toutes les surfaces de section entre la suface de tête et la surface de pied forment un rectangle, et au moins une surface d'une première paire de surfaces latérales opposées comprend une contre-dépouille qui s'étend perpendiculairement à la direction d'introduction, **caractérisé en ce que** les deux surfaces de la deuxième paire de surfaces latérales (26) opposées s'étendent dans leur ensemble dans des plans parallèles.

2. Rivet auto-poinçonnant (4) selon la revendication 1, **caractérisé en ce que** la tige comprend une cavité (28) en forme de rainure ouverte vers le pied de tige (14), laquelle s'étend à angle droit par rapport aux deux surfaces latérales (26) à plans parallèles.

3. Rivet auto-poinçonnant (4) selon l'une ou l'autre des revendications 1 et 2, **caractérisé en ce que** la cavité (28) est remplie au moins partiellement avec une substance à effet hydrostatique.

4. Procédé pour réaliser un rivet auto-poinçonnant (4) comportant une surface de tête (24) qui s'étend à angle droit par rapport à la direction d'introduction, et une surface de pied (29) qui s'étend au moins dans une direction parallèlement à la surface de tête (24), dont toutes les surfaces de section entre la surface de tête et la surface de pied forment un rectangle, et au moins une surface d'une première paire de surfaces latérales opposées comprend une contre-dépouille qui s'étend perpendiculairement à la direction d'introduction, **caractérisé en ce que** l'on réalise tout d'abord un profilé en barre (6) dont la face supérieure correspond au contour de la surface de tête (24), dont la face inférieure correspond au contour de la surface de pied (29) et dont les surfaces latérales correspondent aux contours de la première paire de surfaces latérales du rivet auto-poinçonnant, et ensuite on coupe à partir du profilé en barre (6) des tronçons à une longueur qui correspond à la largeur du rivet auto-poinçonnant (4).

5. Procédé selon la revendication 4, **caractérisé en ce que** l'on réalise le profilé en barre (6) par déformation de matière.

6. Procédé selon la revendication 5, **caractérisé en ce que** la déformation de matière pour réaliser le profilé en barre (6) s'effectue par laminage.

7. Procédé selon la revendication 4, **caractérisé en ce que** le profilage du profilé en barre (6) s'effectue par une déformation par enlèvement de matière.

8. Procédé selon l'une quelconque des revendications 4 à 7, **caractérisé en ce que** l'on met à longueur les rivets auto-poinçonnants (4) par découpe ou par sciage à partir du profilé en barre (6).
